# EUROPEAN PATENT APPLICATION

(11) **EP 3 974 351 A1**
(43) Date of publication of application: **30.03.2022**
(21) Application number: 20197766.7
(22) Date of filing: 23.09.2020
(51) Int. Cl.: B65G 17/08, B65G 17/48, B65G 47/64

(54) **DIVIDER CONVEYOR**

(71) Applicant: Logi Concept Engineering B.V., 7156 NW Beltrum (NL)
(72) Inventor: Brinkers, Joep Hendrik, 7152 KV Eibergen (NL)
(74) Representative: 't Jong, Bastiaan Jacob

(57) **Abstract**

The invention relates to a divider conveyor comprising:
- an endless belt of parallel elongate elements, which elements are interconnected and shiftable relative to each other in longitudinal direction of the elongate elements;
- parallel first and second end rollers around which the endless belt is arranged, wherein the first and second end rollers are axially displaceable relative to each other;
- a guide for guiding the elongate elements of the endless conveyor belt, which guide is arranged between the first and second end rollers and comprises an entry zone adjacent the first end roller, an exit zone adjacent the second end roller and a middle zone arranged between the entry zone and exit zone;
wherein the guide guides the elongate elements in the entry zone in a direction perpendicular to the axial direction of the first end roller, wherein the guide guides the elongate elements in the exit zone in a direction perpendicular to the axial direction of the second end roller and wherein the guide allows the elongate elements in the middle zone to shift relative to each other in longitudinal direction of the elongate elements to compensate for any relative displacement between the end rollers; and
- alignment means arranged in the middle section of the guide, which alignment means engage on the longitudinal ends of a passing element of the conveyor belt for aligning the engaged element parallel to the first and second end roller.

## Description

The invention relates to a divider conveyor comprising:
- an endless belt of parallel elongate elements, which elements are interconnected and shiftable relative to each other in longitudinal direction of the elongate elements;
- parallel first and second end rollers around which the endless belt is arranged, wherein the first and second end rollers are axially displaceable relative to each other;
- a guide for guiding the elongate elements of the endless conveyor belt, which guide is arranged between the first and second end rollers and comprises an entry zone adjacent the first end roller, an exit zone adjacent the second end roller and a middle zone arranged between the entry zone and exit zone;
wherein the guide guides the elongate elements in the entry zone in a direction perpendicular to the axial direction of the first end roller, wherein the guide guides the elongate elements in the exit zone in a direction perpendicular to the axial direction of the second end roller and wherein the guide allows the elongate elements in the middle zone to shift relative to each other in longitudinal direction of the elongate elements to compensate for any relative displacement between the end rollers.

Such a divider conveyor is for example known from EP 2722295 and is used as a track change in a conveyor belt system. A divider conveyor can for example be used to temporarily divert objects transported over the conveyor belt system to another station. To this end the end rollers are axially displaced relative to each other, in particular by having the first end roller fixed and moving the second end roller from a first position to a second position. Objects are then fed to the divider conveyor passed the first end roller into the entry zone, are then transported over the middle zone towards the exit zone, where the second end roller connects to a further conveyor belt, such that the objects can be transported further.

A divider conveyor requires a certain length in order to allow for a certain relative displacement between the two end rollers. This partly depends on the relative axial movement between two adjacent elongate elements, but also on the tendency of the conveyor belt to skew at the middle zone. This tendency is caused by the misalignment of the two end rollers, which are displaced in axial direction.

The tendency of the conveyor belt to skew results in increased friction, rotation of the objects on the carrier surface of the conveyor belt, and after time, when the conveyor belt is less flexible due to fouling, can even result in jamming of the conveyor belt.

It is an object of the invention to reduce or even remove the above mentioned disadvantages.

This object is achieved according to the invention with a divider conveyor according to the preamble, which is characterized by alignment means arranged in the middle section of the guide, which alignment means engage on the longitudinal ends of a passing element of the conveyor belt for aligning the engaged element parallel to the first and second end roller.

Because the alignment means engage on the longitudinal ends of a passing element of the conveyor belt and thus ensure that at least this element is aligned parallel to the first and second end roller, the conveyor belt is allowed less to skew at the middle section. As a result, the distance between the first and second end rollers in transport direction can be reduced, such that the divider conveyor requires less space.

Furthermore, because the conveyor belt is allowed less to skew and because the elongate elements shift in longitudinal direction of the elements, the products on the conveyor belt will have upon entry of the conveyor belt and upon exit of the conveyor belt the same orientation, despite any rotation of the products on the conveyor belt itself due to relative shift between elongate elements.

In a preferred embodiment of the divider conveyor according to the invention the alignment means comprise a first pair of toothed wheels each wheel engaging with a longitudinal end of a passing element of the conveyor belt, wherein the toothed wheels of the first pair are coupled to synchronize the rotation of both wheels.

The toothed wheels ensure a shape defined engagement with the longitudinal ends of an element of the conveyor belt. By coupling both toothed wheels it is ensured that both longitudinal ends of the element pass the toothed wheels at the same time and therefore ensure that the passing element is parallel to both end rollers.

In a further preferred embodiment of the divider conveyor according to the invention the alignment means further comprise a first axle extending parallel to the axis of the end rollers and wherein the first pair of toothed wheels are arranged on the axle.

The axle ensures a direct coupling of the toothed wheels and thus for a reliable synchronization of the rotation of both wheels.

Yet another preferred embodiment of the divider conveyor according to the invention the alignment means comprise a second pair of toothed wheels each wheel engaging with a longitudinal end of a passing element of the conveyor belt, wherein the second pair is spaced apart, in transport direction of the conveyor belt, from the first pair.

By providing a second pair of toothed wheels the passing elements in the middle zone of the guide can be aligned at more than one position along the path of the elements, such that the chance on skewing of the conveyor belt is further reduced.

In a further preferred embodiment of the divider conveyor according to the invention at least the first axle is arranged via a parallelogram linkage to the axis of the end rollers. The parallelogram linkage ensure that the first axle remains parallel to the axis of the end rollers. The change in distance between the first axle and the axis of the end rollers is compensated by the addition or reduced rotation of the toothed wheels relative to the movement of the conveyor belt.

In another embodiment of the divider conveyor according to the invention the guide is arranged between the endless conveyor belt and comprises a guide rail, and the elements comprise protrusions extending from the surface opposite of the carrying surface of the conveyor belt into the guide rail.

The protrusions of the elements of the conveyor belt extend into the guide rail, such that at the middle zone the elements will be shifted in axial direction when an offset is present in axial direction between the first end roller and the second end roller.

Still another embodiment of the divider conveyor according to the invention further comprises a support frame having an entry zone frame part, a middle zone frame part and an exit zone frame part, wherein the first end roller is arranged on the entry zone frame part, the second end roller is arranged on the exit zone frame part and wherein the entry zone frame part and exit zone frame part are displaceable relative to each other in axial direction of the end rollers, and wherein the middle zone frame part is formed by a length adjustable connection between the entry zone frame part and the exit zone frame part.

The alignment means can be provided in the upper part of the conveyor belt, or the bottom part of the conveyor belt or in both parts. Typically, the bottom part has a lower tension than the upper part, such that the bottom part is more easily aligned with the alignment means and accordingly the whole conveyor belt.

These and other features of the invention will be elucidated in conjunction with the accompanying drawings.
Figure 1 shows a perspective view of an embodiment of a divider conveyor according to the invention.
Figures 2A and 2B show a schematic top view of the divider conveyor of figure 1 in two positions.
Figure 3 shows a schematic cross-sectional view of the conveyor of figure 1.
Figure 4 shows a detail of figure 2A.
Figure 5 shows a schematic view of the linkage of the alignment means with an end roller of the embodiment of figure 1.

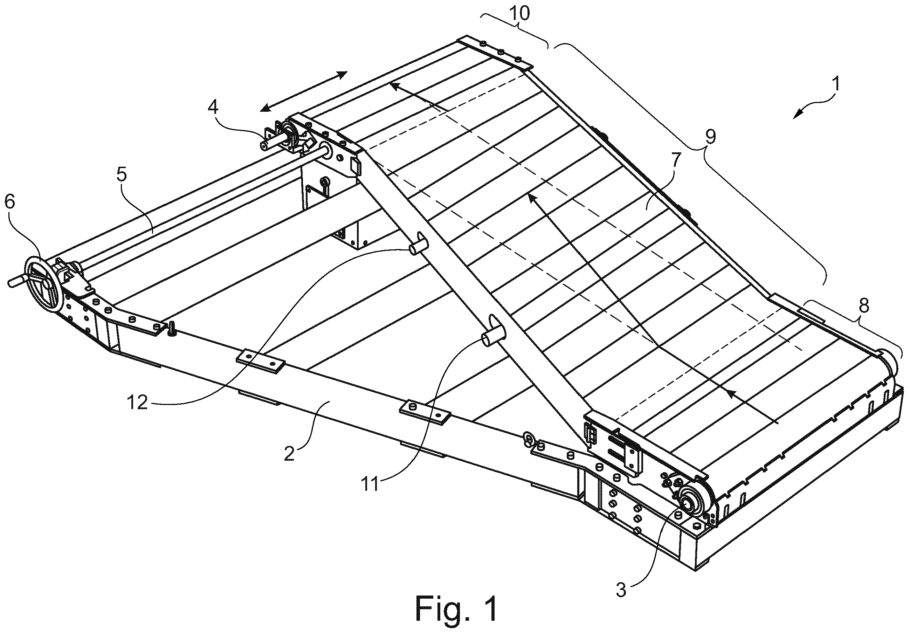

Figure 1 shows a perspective view of an embodiment of a divider conveyor 1 according to the invention. The conveyor 1 has a support frame 2 on which a first end roller 3 is arranged fixedly on one end, while a second end roller 4 is axially displacable. The movement of the second end roller 4 in axial direction is controlled by a screw spindle 5 and a wheel 6.

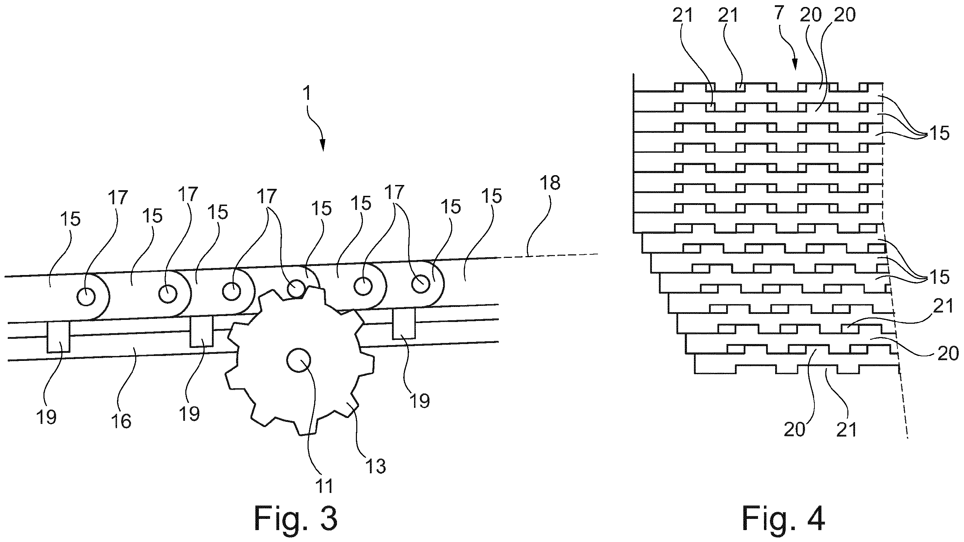

An endless conveyor belt 7 is arranged around the first end roller 3 and second end roller 4. A guide is provided between the conveyor belt 7 (see figure 3), which guides the conveyor belt in a entry zone 8 in a direction perpendicular to the axial direction of the first end roller 3. The conveyor belt 7 then arrives at a middle zone 9, where the conveyor belt 7 is shifted in axial direction depending on the offset between the first end roller 3 and second end roller 4. Finally the conveyor belt 7 arrives at an exit zone 10, where the guide guides the conveyor belt 7 again in a direction perpendicular to the axial direction of the first end roller 3 and second end roller 4.

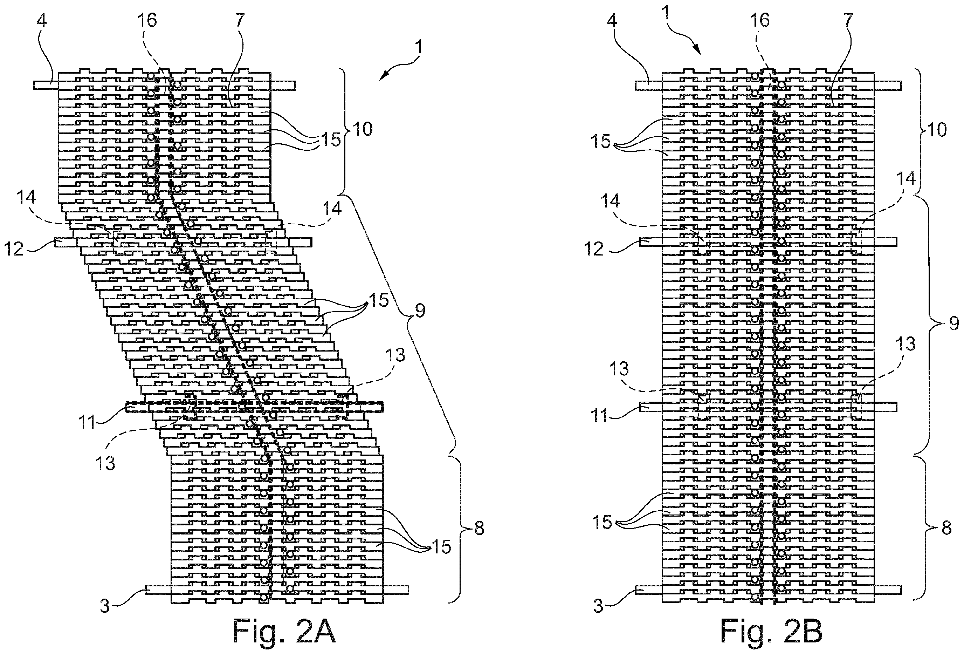

At the middle zone 9 two shafts 11, 12 are arranged with toothed wheels 13, 14 respectively (see also figure 2) which engage on the passing conveyor belt 7 and ensure, that the conveyor belt 7 remains parallel aligned to the first end roller 3 and second end roller 4 despite an offset between the two end rollers 3, 4. These shafts 11, 12 with corresponding toothed wheels 13, 14 provide in this embodiment the alignment means for the divider conveyor according to the invention.

Figure 2A shows the divider conveyor 1 in a position, where the second end roller 4 is offset in axial direction relative to the first end roller 3. The conveyor belt 7 has a plurality of parallel elongate elements 15 (see also figure 4), which elements 15 are interconnected and shiftable relative to each other in longitudinal direction of the elongate elements 15. This allows for the offset between the two end rollers 3, 4.

The shafts 11 and 12 are connected via a link system between the first end roller 3 and second end roller 4 to ensure that the shafts 11 and 12 remain parallel and shift along with the displacement of the second end roller 4.

A guide 16 is arranged underneath the carrier surface of the conveyor belt 7 to guide the elements 15 in a straight path along the entry zone 8, and in a straight path along the exit zone 10, and in the middle zone 9 in a correct direction depending on the offset between the first and second end rollers 3, 4.

Figure 2B shows the divider conveyor 1 in a straight position, wherein the first end roller 3 is aligned in transport direction with the second end roller 4 and accordingly also with the shafts 11, 12.

Figure 3 shows a schematic cross-sectional view of the conveyor 1 of figure 1. The elongate elements 15 are connected by rods 17 and are provided on the surface opposite of the carrier surface 18 of the conveyor belt 7 with protrusions 19, which cooperate with the guide rail 16.

The toothed wheel 13, which is arranged on the shaft 11 engages on the elongate elements 15 to ensure that the elongate elements 15 remain parallel aligned with the end rollers 3, 4.

Figure 4 shows a detail of figure 2A and in particular of the conveyor belt 7 which is formed by interconnected elongate elements 15. Along the longitudinal sides of the elements 15 protrusions 20 and slots 21 are provided, which allow for a shift in axial direction relative to each other.

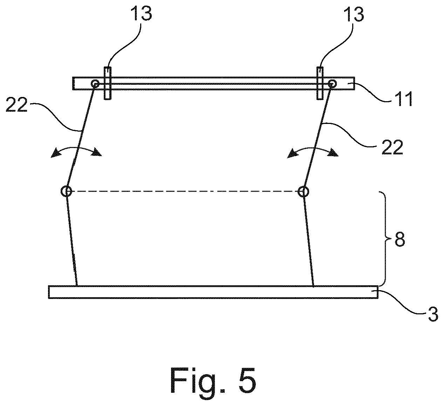

In figure 5 a schematic view is shown of the linkage of the shaft 11 with toothed wheels 13 with the end roller 3. To ensure the parallelity between the shaft 11 and the end roller 3, a parallelogram linkage 22 is provided, which is connected between the entry zone 8 and the shaft 11 with the toothed wheels 13.

## Claims

1. Divider conveyor comprising:
- an endless belt of parallel elongate elements, which elements are interconnected and shiftable relative to each other in longitudinal direction of the elongate elements;
- parallel first and second end rollers around which the endless belt is arranged, wherein the first and second end rollers are axially displaceable relative to each other;
- a guide for guiding the elongate elements of the endless conveyor belt, which guide is arranged between the first and second end rollers and comprises an entry zone adjacent the first end roller, an exit zone adjacent the second end roller and a middle zone arranged between the entry zone and exit zone;
wherein the guide guides the elongate elements in the entry zone in a direction perpendicular to the axial direction of the first end roller, wherein the guide guides the elongate elements in the exit zone in a direction perpendicular to the axial direction of the second end roller and wherein the guide allows the elongate elements in the middle zone to shift relative to each other in longitudinal direction of the elongate elements to compensate for any relative displacement between the end rollers
**characterized by**
alignment means arranged in the middle section of the guide, which alignment means engage on the longitudinal ends of a passing element of the conveyor belt for aligning the engaged element parallel to the first and second end roller.

2. Divider conveyor according to claim 1, wherein the alignment means comprise a first pair of toothed wheels each wheel engaging with a longitudinal end of a passing element of the conveyor belt, wherein the toothed wheels of the first pair are coupled to synchronize the rotation of both wheels.

3. Divider conveyor according to claim 2, wherein the alignment means further comprise a first axle extending parallel to the axis of the end rollers and wherein the first pair of toothed wheels are arranged on the axle.

4. Divider conveyor according to claim 2 or 3, wherein the alignment means comprise a second pair of toothed wheels each wheel engaging with a longitudinal end of a passing element of the conveyor belt, wherein the second pair is spaced apart, in transport direction of the conveyor belt, from the first pair.

5. Divider conveyor according to claims 3 or 4, wherein at least the first axle is arranged via a parallelogram linkage to the axis of the end rollers.

6. Divider conveyor according to any of the preceding claims, wherein the guide is arranged between the endless conveyor belt and comprises a guide rail, and wherein the elements comprise protrusions extending from the surface opposite of the carrying surface of the conveyor belt into the guide rail.

7. Divider conveyor according to any of the preceding claims, further comprising a support frame having an entry zone frame part, a middle zone frame part and an exit zone frame part, wherein the first end roller is arranged on the entry zone frame part, the second end roller is arranged on the exit zone frame part and wherein the entry zone frame part and exit zone frame part are displaceable relative to each other in axial direction of the end rollers, and wherein the middle zone frame part is formed by a length adjustable connection between the entry zone frame part and the exit zone frame part.
